# EUROPÄISCHE PATENTANMELDUNG

(11) **EP 2 151 794 A1**
(43) Veröffentlichungstag der Anmeldung: **10.02.2010**
(21) Anmeldenummer: 08104907.4
(22) Anmeldetag: 28.07.2008
(51) Int. Cl.: G06Q 20/00

(54) **Verfahren zur Abwicklung einer elektronischen Zahlung**

(71) Anmelder: Norpla - Card Systems Management GmbH, 40547 Düsseldorf (DE)
(72) Erfinder: Platzek, Thomas, Prof. Dr., 40489 Düsseldorf (DE); Norpoth, Daniel, 14469 Potsdam (DE)
(74) Vertreter: Cohausz & Florack

(57) **Zusammenfassung**

Die Erfindung betrifft ein Verfahren zur Abwicklung einer elektronischen Zahlung, bei welchem ein erster Debitor anhand der auf einem Datenträger gespeicherten Informationen identifiziert wird, bei welchem der Zahlungsbetrag elektronisch erfasst wird und bei welchem der Zahlungsbetrag einem ersten Kreditor bargeldlos gutgeschrieben wird. Ein derartiges bekanntes Verfahren wird zur Ermöglichung einer Aufteilung des Zahlungsbetrages dadurch ausgestaltet und weitergebildet, dass auf dem Datenträger eine Information zur Aufspaltung des Zahlungsbetrages gespeichert wird, dass die Information zur Aufspaltung des Zahlungsbetrages elektronisch übermittelt wird, dass der Zahlungsbetrag bei Vorliegen der Information zur Aufspaltung auf einen zweiten Kreditor übertragen und auf dem ersten Debitor und einem zweiten Debitor aufgeteilt wird, dass die aufgeteilten Zahlungsbeträge dem zweiten Kreditor bargeldlos gutgeschrieben werden und dass der Zahlungsbetrag dem ersten Kreditor von dem zweiten Kreditor bargeldlos gutgeschrieben wird.

## Beschreibung

Die Erfindung betrifft ein Verfahren zur Abwicklung einer elektronischen Zahlung, bei welchem ein erster Debitor anhand der auf einem Datenträger gespeicherten Informationen identifiziert wird, bei welchem der Zahlungsbetrag elektronisch erfasst wird und bei welchem der Zahlungsbetrag einem ersten Kreditor bargeldlos gutgeschrieben wird.

Derartige Verfahren zur Abwicklung einer elektronischen Zahlung sind in einer Vielzahl von Ausgestaltungen bekannt und sehr weit verbreitet. Bei den bekannten Verfahren handelt es sich um solche zur Abwicklung von Zahlungen mit Hilfe von so genannten Electronic Cash-Karten oder so genannten Kreditkarten. Diesen Kartensystemen ist zu Eigen, dass die zugehörigen Kunststoffkarten elektronische Datenträger aufweisen, auf denen Informationen zu dem ersten Debitor und einem für diesen ersten Debitor die Zahlung abwickelnden Vertragspartner gespeichert sind. Zahlungen mit Hilfe dieser bekannten Zahlungssysteme werden täglich zu Millionen weltweit abgewickelt. Bei diesen bekannten Verfahren zur Abwicklung einer elektronischen Zahlung besteht eine 1-zu-1-Relation zwischen dem ersten Debitor und dem ersten Kreditor, d. h. die Zahlung wird ausschließlich zwischen diesen beiden Personen abgewickelt. Gleichzeitig ist diesem bekannten Verfahren zu Eigen, dass dem ersten Debitor die Identität des ersten Kreditors und dem ersten Kreditor die Identität des ersten Debitors jeweils bekannt ist.

Geschäftsbeziehungen, die eine Aufteilung von Zahlungsbeträgen auf einen ersten und einen zweiten Debitor gegenüber dem ersten Kreditor erfordern, können mit den bekannten elektronischen Zahlungssystemen bislang nicht abgewickelt werden. Derartige Anforderungen ergeben sich beispielsweise im Rahmen des so genannten Restaurantscheck-Verfahrens, bei welchem der Arbeitgeber unter Inanspruchnahme zum Teil komplexer steuerlicher Vergünstigungen den Arbeitnehmer Zuschüsse zu der Bezahlung von Mahlzeiten gewährt.

Ausgehend von dem zuvor beschriebenen Stand der Technik liegt der vorliegenden Erfindung somit die Aufgabe zugrunde, ein Verfahren zur Abwicklung einer elektronischen Zahlung zur Verfügung zu stellen, welches die Aufteilung einer Zahlungsforderung eines ersten Kreditors auf einen ersten und einen zweiten Debitor gewährleistet.

Erfindungsgemäß wird die zuvor hergeleitete und aufgezeigte Aufgabe dadurch gelöst, dass auf dem Datenträger eine Information zur Aufspaltung des Zahlungsbetrages gespeichert wird, dass die Information zur Aufspaltung des Zahlungsbetrages elektronisch übermittelt wird, dass der Zahlungsbetrag bei Vorliegen der Information zur Aufspaltung auf einen zweiten Kreditor übertragen wird und auf den ersten Debitor und einen zweiten Debitor aufgeteilt wird, dass die aufgeteilten Zahlungsbeträge dem zweiten Kreditor bargeldlos gutgeschrieben werden und dass der Zahlungsbetrag dem ersten Kreditor von dem zweiten Kreditor bargeldlos gutschrieben wird.

Erfindungsgemäß wird somit eine Aufspaltung des Zahlungsbetrages auf einen ersten und einen zweiten Debitor ermöglicht, indem bei Vorliegen einer Information zur Aufspaltung die Zahlungsforderung zunächst auf einen zweiten Kreditor übertragen wird, der dann, auf Grund der ihm vorliegenden Informationen über den ersten Debitor, die Aufspaltung auf diesen ersten Debitor und einen dem ersten Debitor zuzuordnenden zweiten Debitor, z. B. den Arbeitgeber des ersten Debitors, vornehmen kann. Die Zahlungsvermittlung des gesamten Zahlungsbetrages erfolgt dann von dem zweiten Kreditor an den ersten Kreditor, so dass die Forderung des ersten Kreditors somit befriedigt wird.

Eine erste vorteilhafte Ausgestaltung erfährt das erfindungsgemäße Verfahren dadurch, dass die Aufteilung des Zahlungsbetrages auf den zweiten Debitor bei Vorliegen einer Ausschlussinformation ausgeschlossen wird. Durch diese Ausgestaltung des erfindungsgemäßen Verfahrens kann beispielsweise gewährleistet werden, dass, für den üblichen Fall, dass nur eine Mahlzeit pro Tag bezuschusst wird, eine zweite Inanspruchnahme des zweiten Debitors am selben Tag abgewiesen wird. Andere Ausschlussinformationen können beispielsweise ein nicht mehr bestehendes Arbeitsverhältnis zwischen dem ersten und dem zweiten Debitor oder spezifische steuerliche Anforderungen darstellen.

Eine weitere Ausgestaltung erfährt das erfindungsgemäße Verfahren dadurch, dass Informationen zu dem zweiten Debitor unabhängig von dem Datenträger gespeichert werden. Durch diese Ausgestaltung wird gegenüber dem ersten Kreditor sichergestellt, dass dieser aus Datenschutzgründen keine Informationen über den Arbeitgeber des ersten Debitors erhält.

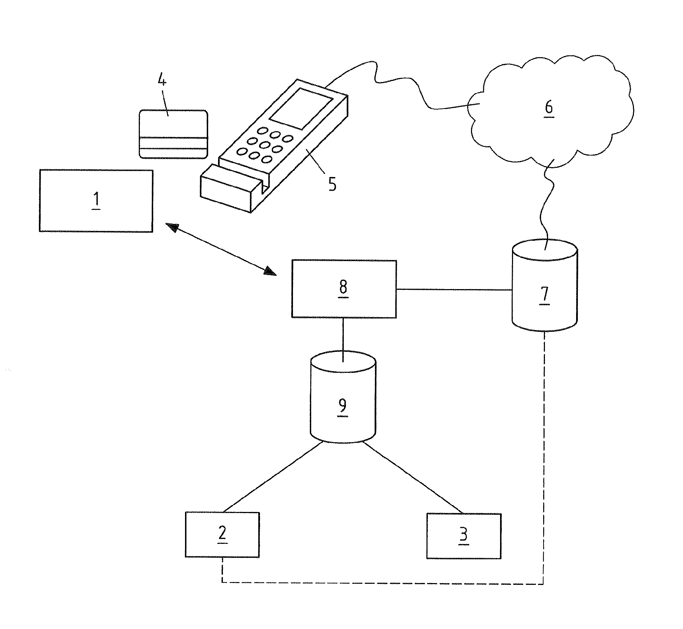

Es gibt nun eine Vielzahl von Möglichkeiten, das erfindungsgemäße Verfahren zur Abwicklung einer elektronischen Zahlung auszugestalten und weiterzubilden. Hierzu wird verwiesen einerseits auf die dem Patentanspruch 1 nachgeordneten Patentansprüche sowie andererseits auf die Beschreibung eines Ausführungsbeispiels in Verbindung mit der Zeichnung.

Die einzige Figur der Zeichnung zeigt schematisch ein Ausführungsbeispiel eines erfindungsgemäßen Verfahrens zur Abwicklung einer elektronischen Zahlung.

Mit dem erfindungsgemäßen Verfahren wird gewährleistet, dass eine Zahlung gegenüber einem ersten Kreditor (1) auf einen ersten Debitor (2) und einem zweiten Debitor (3) aufgeteilt werden kann.

Im Rahmen der Zahlungsabwicklung führt der erste Debitor (2) einen Datenträger (4) in ein Datenlese- und Eingabegerät (5) ein, welches auch dazu dient, den Zahlungsbetrag elektronisch durch Eingabe über eine Zifferntastatur oder Anschluss an einen elektronisches Kassensystem zu erfassen. Das Datenlese- und Eingabegerät (5) überträgt zur Abwicklung der Zahlung die erfassten Informationen über ein elektronisches Netzwerk (6) an ein so genanntes Onlinetransaktionsprozesssystem (OLTP) (7), welches auch bei der Anwendung der aus dem Stand der Technik bekannten Verfahren zur Abwicklung einer elektronischen Zahlung zum Einsatz kommt.

Wird bei der Anwendung des erfindungsgemäßen Verfahrens in dem Onlinetransaktionsprozesssystems (7) die Information zur Aufspaltung des Zahlungsbetrages identifiziert, so wird der Zahlungsbetrag auf den zweiten Kreditor (8) übertragen. In diesem Zusammenhang werden dem zweiten Kreditor (8) auch die Informationen zu dem ersten Debitor und dem ersten Kreditor zur Verfügung gestellt.

Anhand der nunmehr beim zweiten Kreditor (8) vorliegenden Informationen kann dieser zweite Kreditor (8) die Zahlungsbeträge nach vorgegebenen Algorithmen aufteilen bzw. eine Aufteilung der Zahlungsbeträge bei Vorliegen einer Ausschlussinformation im eigenen Datenbestand des Datenverarbeitungssystems (9) des zweiten Kreditors (8) ausschließen.

Nicht im Detail dargestellt wird in der einzigen Figur der Zeichnung das exakte Verfahren zum Einzug der aufgeteilten Zahlungsbeiträge des ersten Debitors (2) und des zweiten Debitors (3) zugunsten des zweiten Kreditors (8). Weiter ist in dieser Figur nicht im Einzelnen dargestellt, wie der gesamte Zahlungsbeitrag von dem zweiten Kreditor (8) an den ersten Kreditor (1) übermittelt wird. Hierbei kommen vorzugsweise aus dem Stand der Technik hinlänglich bekannte Verfahren zum Einsatz.

Zur Verdeutlichung der Unterschiede zwischen dem erfindungsgemäßen Verfahren und den aus dem Stand der Technik bekannten Verfahren wird in der einzigen Figur der Zeichnung der beim Stand der Technik verwirklichte Zahlungsschluss zwischen dem ersten Debitor (2) und dem ersten Kreditor (1) über das Onlinetransaktionsprozesssystem (7) durch eine gestrichelte Linie veranschaulicht.

Das erfindungsgemäße Verfahren und insbesondere das dargestellte Ausführungsbeispiel des erfindungsgemäßen Verfahrens gewährleistet eine automatisierte, an Bedingungen knüpfbare Aufteilung von Zahlungsbeträgen zwischen einem ersten Debitor (2) und einem zweiten Debitor (3), wobei weitgehende Gestaltungsmöglichkeiten im Hinblick auf eine aus datenschutzrechtlicher Sicht geforderte Anonymisierung der beteiligten Debitoren und Kreditoren gewährleistet ist.

## Patentansprüche

1. Verfahren zur Abwicklung einer elektronischen Zahlung, bei welchem ein erster Debitor anhand der auf einem Datenträger gespeicherten Information identifiziert wird, bei welchem der Zahlungsbetrag elektronisch erfasst wird und bei welchem der Zahlungsbetrag einem ersten Kreditor bargeldlos gutgeschrieben wird, **dadurch**
**gekennzeichnet, dass** auf dem Datenträger eine Information zur Aufspaltung des Zahlungsbetrages gespeichert wird, dass die Information zur Aufspaltung des Zahlungsbetrages elektronisch übermittelt wird, dass der Zahlungsbetrag bei Vorliegen der Information zur Aufspaltung auf einen zweiten Kreditor übertragen und auf dem ersten Debitor und einem zweiten Debitor aufgeteilt wird, dass die aufgeteilten Zahlungsbeträge dem zweiten Kreditor bargeldlos gutgeschrieben werden und dass der Zahlungsbetrag dem ersten Kreditor von dem zweiten Kreditor bargeldlos gutgeschrieben wird.

2. Verfahren nach Anspruch 1, **dadurch**
**gekennzeichnet, dass** die Aufteilung des Zahlungsbetrages auf den zweiten Debitor bei Vorliegen einer Ausschlussinformation ausgeschlossen wird.

3. Verfahren nach Anspruch 1 oder 2, **dadurch**
**gekennzeichnet, dass** Informationen zu dem zweiten Debitor unabhängig von dem Datenträger gespeichert werden.
